# EUROPÄISCHE PATENTSCHRIFT

(11) **EP 3 132 346 B1**
(45) Veröffentlichungstag und Bekanntmachung des Hinweises auf die Patenterteilung: **12.06.2019**
(21) Anmeldenummer: 15715982.3
(22) Anmeldetag: 07.04.2015
(51) Int. Cl.: G06F 8/40

(54) **VERFAHREN ZUM AUSFÜHREN EINER CODEFOLGE AUF EINEM SICHERHEITSMODUL**
METHOD FOR EXECUTING A CODE SEQUENCE ON A SECURITY MODULE
PROCÉDÉ D'EXÉCUTION D'UNE SÉRIE DE CODES SUR UN MODULE DE SÉCURITÉ

(30) Priorität: 15.04.2014 DE 102014005605
(43) Veröffentlichungstag der Anmeldung: 22.02.2017
(73) Patentinhaber: Giesecke+Devrient Mobile Security GmbH, 81677 München (DE)
(72) Erfinder: MANTRI, Deepen, 81371 München (DE); TREGER, Jörn, 83022 Rosenheim (DE); DÖNGES, Christian, 85356 Freising (DE)
(86) Internationale Anmeldenummer: PCT/EP2015/000730
(87) Internationale Veröffentlichungsnummer: WO 2015/158419

(56) Entgegenhaltungen:
- SAOUGKOS D ET AL: "Revisiting Java Bytecode Compression for Embedded and Mobile Computing Environments", IEEE TRANSACTIONS ON SOFTWARE ENGINEERING, IEEE SERVICE CENTER, LOS ALAMITOS, CA, US, Bd. 33, Nr. 7, 1. Juli 2007 (2007-07-01), Seiten 478-495, XP011185141, ISSN: 0098-5589, DOI: 10.1109/TSE.2007.1021
- CLAUSEN L R ET AL: "JAVA BYTECODE COMPRESSION FOR LOW-END EMBEDDED SYSTEMS", ACM TRANSACTIONS ON PROGRAMMING LANGUAGE AND SYSTEMS, ACM, NEW YORK, NY, Bd. 22, Nr. 3, 1. Mai 2000 (2000-05-01), Seiten 471-489, XP008050340, ISSN: 0164-0925, DOI: 10.1145/353926.353933
- BIZZOTTO G ET AL: "PRACTICAL JAVA CARD BYTECODE COMPRESSION", RENCONTRES FRANCOPHONES DU PARALLELISME, XX, XX, 10. April 2002 (2002-04-10), Seiten 1-06, XP008053098, in der Anmeldung erwähnt

## Beschreibung

Die Erfindung betrifft ein Verfahren zum Ausführen einer Codefolge auf einem Sicherheitsmodul. Ferner betrifft die Erfindung ein entsprechendes Sicherheitsmodul sowie ein Verfahren und eine Einrichtung zur Erzeugung einer Codefolge auf einem Sicherheitsmodul.

Aus dem Stand der Technik ist es bekannt, eine auf einem Sicherheitsmodul zu interpretierende Codefolge zu komprimieren. In dem Dokument G. Bizzotto et al., "Practical Java Card Bytecode compression", RENPAR'14/ASF/ SYMPA, Hamamet, Tunesien, 10. -13. April 2002, wird die Kompression von JavaCard Bytecode unter Verwendung von Instruktionen beschrieben, die nicht in der JavaCard-Spezifikation verwendet werden.

Die Druckschrift EP 1 709 534 B1 beschreibt ein Verfahren zur Ausführung eines Programms durch eine virtuelle Maschine mit Hilfe eines Codeinterpreters, der in unterschiedlichen Versionen vorgehalten und verwendet wird.

In der Druckschrift EP 1 920 328 B1 wird ein Verfahren zum Ausführen einer Applikation auf einem portablen Datenträger beschrieben, bei dem zwischen Operationscodesprachen durch Umschalten zwischen verschiedenen Operationscodetabellen gewechselt wird.

Die bekannten Verfahren zum Komprimieren von Code bzw. zum Ausführen von komprimiertem Code weisen den Nachteil auf, dass die Komprimierung fest voreingestellt ist und nicht flexibel, zum Beispiel an Gegebenheiten auf einem Sicherheitsmodul, angepasst werden kann.

Aufgabe der Erfindung ist es, eine Codefolge auf einem Sicherheitsmodul flexibel abzuspeichern und entsprechend zu interpretieren.

Diese Aufgabe wird durch den Gegenstand der unabhängigen Ansprüche gelöst. Weiterbildungen der Erfindung sind in den abhängigen Ansprüchen definiert.

Das erfindungsgemäße Verfahren dient zum Ausführen einer Codefolge auf einem Sicherheitsmodul, wobei die Codefolge zu ersetzende Codes und zu interpretierende Codes umfasst. In einem Schritt a) des Verfahrens wird ein jeweiliger zu ersetzender Code durch eine Teilcodefolge temporär ersetzt, wobei die Teilcodefolge zumindest einen Code mit interpretierbarem Codewert umfasst. Das Ersetzen erfolgt dabei abhängig von dem Codewert des zu ersetzenden Codes. In einem Schritt b) werden die zu interpretierenden Codes der Codefolge und der Teilcodefolge mit Hilfe von Interpretationsinformationen für Codewerte interpretiert.

Das erfindungsgemäße Verfahren zeichnet sich dadurch aus, dass in dem obigen Schritt des Ersetzens die Teilcodefolge für den Codewert des zu ersetzenden Codes nicht nur in Abhängigkeit von dem Codewert, sondern auch in Abhängigkeit von einer Auswahlinformation erzeugt wird.

Das erfindungsgemäße Verfahren hat dabei den Vorteil, dass durch eine geeignete Festlegung einer Auswahlinformation flexibel zu ersetzenden Codes für entsprechende Teilcodefolgen definiert werden können. Insbesondere ist dabei der zu ersetzende Code komprimiert, d.h. er ist kleiner als die Teilcodefolge, durch welche der zu ersetzende Code ersetzt wird. Hierdurch kann Speicherplatz auf dem Sicherheitsmodul gespart werden.

Das Sicherheitsmodul, auf dem die Codefolge ausgeführt wird, kann verschieden ausgestaltet sein. Das Sicherheitsmodul ist vorzugsweise ein Hardware-Sicherheitsmodul. Insbesondere kann das Sicherheitsmodul ein tragbarer Datenträger sein, der vorzugsweise in ein Endgerät eingesetzt werden kann. Ebenso kann das Sicherheitsmodul fest in ein Endgerät eingebaut sein. Vorzugsweise ist das Sicherheitsmodul also eine oder mehrere der folgenden Komponenten: eine SIM/USIM-Karte (SIM = Subscriber Identity Modul, USIM = Universal Subscriber Identity Modul), eine MikroSD-Karte, einen USB-Token (USB = Universal Serial Bus), eine Chipkarte, ein RFID-Modul (RFID = Radio Frequency Identification), ein TPM-Modul (TPM = Trusted Platform Modul), ein NFC-Modul (NFC = Near Field Communication), ein embedded SIM-Modul, eine TEE-Umgebung (TEE = Trusted Execution Environment im Sinne der GlobalPlatform Spezifikation).

Die im erfindungsgemäßen Verfahren verwendete Auswahlinformation kann unterschiedlich ausgestaltet sein. In einer Variante sind abhängig von der Auswahlinformation unterschiedliche Teilcodefolgen für den gleichen Codewert erzeugbar. Ebenso kann die Auswahlinformation derart ausgestaltet sein, dass sie eine von mehreren Ersetzungsvorschriften für zu ersetzende Codes auswählt.

In einer weiteren Ausgestaltung des erfindungsgemäßen Verfahrens umfasst die Codefolge neben den Codes Parameter und/oder die Auswahlinformation selbst. Dabei kann die Auswahlinformation eine Positionsauswahlinformation umfassen, welche angibt, an welcher Position in der Teilcodefolge ein jeweiliger Parameter der Codefolge einzufügen ist. Vorzugsweise ist die Auswahlinformation die Positionsauswahlinformation, d.h. die Auswahlinformation besteht nur aus der Positionsauswahlinformation. Die Positionsauswahlinformation ist vorzugsweise in der oben beschriebenen Ersetzungsvorschrift oder ggf. auch in den Interpretationsinformationen, z.B. in einer entsprechenden Interpretertabelle, enthalten.

In einer weiteren bevorzugten Variante ist die Auswahlinformation der Codefolge zugeordnet und hängt davon ab:
- zu welchem die Codefolge gehört, zum Beispiel ob die Codefolge zum Betriebssystem, zu einer Bibliothek, zu einer Anwendung bzw. einem Applet auf dem Sicherheitsmodul gehört;
   und/oder
- an welchem Speicherort im Sicherheitsmodul die Codefolge gespeichert ist, insbesondere ob die Codefolge im ROM, in einem nicht-volatilen Speicher, in einem Verzeichnis oder in einer Sicherheits-Domäne auf dem Sicherheitsmodul gespeichert ist;
   und/oder
- zu welcher Applikation und/oder zu welchem Paket und/oder zu welcher Methode die Codefolge gehört;
   und/ oder
- von welchem Codeherausgeber die Codefolge stammt, insbesondere ob die Codefolge von dem Hersteller des Sicherheitsmoduls, von dem Herausgeber des Sicherheitsmoduls oder von unbekannten Dritten stammt;
   und/oder
- welcher Sicherheitsstufe die Codefolge zugeordnet ist, d.h. in welcher Zertifikatshierarchie die Codefolge liegt.

In einer weiteren Ausgestaltung des Verfahrens weisen zu interpretierende Codes Codewerte auf, die in einer Code-Spezifikation vorgegeben sind, wohingegen zu ersetzende Codes in der Code-Spezifikation ungenutzte Codewerte aufweisen. Die Code-Spezifikation kann dabei z.B. eine JavaCard-Spezifikation sein, wobei in diesem Fall auf dem Sicherheitsmodul eine Java Virtual Machine läuft. Die Codewerte der Code-Spezifikation können z.B. Bytecodes und insbesondere JavaCard-Bytecodes sein.

In einer weiteren Ausgestaltung des Verfahrens weisen zu interpretierende Codes der Codefolge und/oder Codes der Teilcodefolge proprietäre, nicht in einer Code-Spezifikation genutzte Codewerte auf, welche mittels der Interpretationsinformationen interpretiert werden. Im Unterschied zu den oben definierten ungenutzten Codewerten, welche für zu ersetzende Codes verwendet werden können, sind die proprietären Codewerte ohne den Zwischenschritt des Ersetzens direkt mittels der Interpretationsinformationen interpretierbar.

Neben dem oben beschriebenen Verfahren zum Ausführen einer Codefolge umfasst die Erfindung ferner ein Sicherheitsmodul mit einer darauf gespeicherten Codefolge, wobei die Codefolge zu ersetzende Codes und zu interpretierende Codes umfasst, wobei das Sicherheitsmodul dazu eingerichtet ist, das oben beschriebene erfindungsgemäße Verfahren zum Ausführen der Codefolge bzw. eine oder mehrere bevorzugte Varianten dieses Verfahrens auszuführen.

Die Erfindung betrifft darüber hinaus ein Verfahren zur Erzeugung einer Codefolge auf einem Sicherheitsmodul, wobei die Codefolge zu ersetzende Codes und zu interpretierende Codes umfasst. Die Codefolge wird dabei aus Teilcodefolgen mit jeweils zumindest einem Code mit interpretierbarem Codewert und aus zu interpretierenden Codes generiert und auf dem Sicherheitsmodul gespeichert. Das Verfahren zeichnet sich dadurch aus, dass eine Auswahlinformation festgelegt wird, so dass bei dem Ausführen der Codefolge auf dem Sicherheitsmodul zu ersetzenden Codes in Abhängigkeit von der Auswahlinformation temporär durch jeweilige Teilcodefolgen ersetzt werden.

Das soeben beschriebene Verfahren ist vorzugsweise derart ausgestaltet, dass die hierdurch erzeugte Codefolge mit dem oben beschriebenen erfindungsgemäßen Verfahren zum Ausführen der Codefolge bzw. einer oder mehrerer bevorzugter Varianten dieses Verfahrens ausgeführt werden kann.

Die Erfindung betrifft darüber hinaus eine Einrichtung zur Erzeugung einer Codefolge auf einem Sicherheitsmodul, wobei die Codefolge zu ersetzende Codes und zu interpretierende Codes umfasst, wobei die Einrichtung zum Ausführen des oben beschriebenen Verfahrens zur Erzeugung einer Codefolge bzw. einer oder mehrerer bevorzugter Varianten dieses Verfahrens ausgestaltet ist.

Ausführungsbeispiele der Erfindung werden nachfolgend anhand der beigefügten Figuren detailliert beschrieben.

Es zeigen:
- Fig. 1: eine schematische Darstellung der Ausführung einer Codefolge aus JavaCard Bytecodes basierend auf einer Variante des erfindungsgemäßen Verfahrens;
- Fig. 2: eine Interpretertabelle, welche bei der Ausführung der Codefolge aus Fig. 1 verwendet werden kann;
- Fig. 3: eine Dekompressionstabelle, welche bei der Ausführung der Codefolge aus Fig. 1 verwendet werden kann; und
- Fig. 4: ein Ablaufdiagramm, welches die Erzeugung der in Fig. 1 ausgeführten Codefolge wiedergibt.

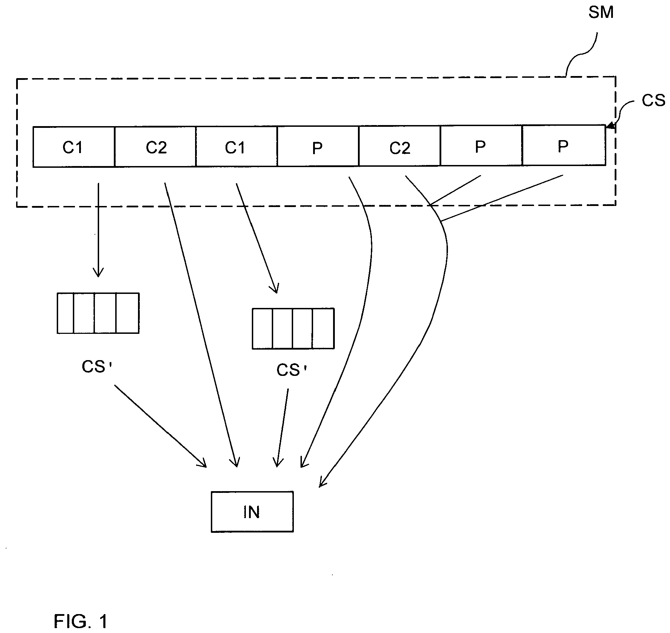

Nachfolgend wird das erfindungsgemäße Verfahren beispielhaft anhand eines Sicherheitsmoduls SM in der Form einer Chipkarte erläutert. Das Sicherheitsmodul ist in Fig. 1 lediglich schematisch durch ein gestricheltes Rechteck dargestellt. Die das Sicherheitsmodul repräsentierende Chipkarte ist eine sog. JavaCard, die zur Ausführung von Codefolgen aus JavaCard Bytecodes eine virtuelle Maschine verwendet. Die weiter unten genannten Beispiele von Bytecodes stammen dabei aus der JavaCard-Spezifikation.

Auf dem Sicherheitsmodul SM befindet sich die auszuführende Codefolge CS aus aufeinander folgenden Codes C1 und C2 und den Codes zugeordneten Parametern P. Die Codes C1 stellen dabei zu ersetzende Codes im Sinne der Patentansprüche dar. Analog stellen die Codes C2 zu interpretierende Codes im Sinne der Patentansprüche dar. Trotz Verwendung der gleichen Bezugszeichen sind die Codes C1 bzw. deren Codewerte sowie die Codes C2 bzw. deren Codewerte unterschiedlich. Den jeweiligen Codes C1 bzw. C2 können ein oder mehrere Parameter P oder ggf. auch kein Parameter zugeordnet sein. Sofern einem Code der Codefolge CS ein oder mehrere Parameter zugeordnet sind, folgen diese in Fig. 1 in der Richtung von links nach rechts auf den entsprechenden Code.

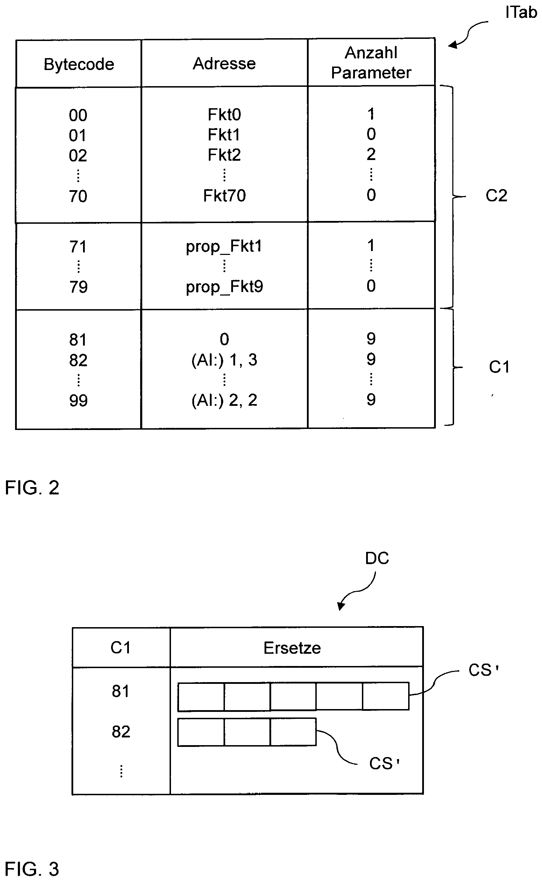

Im Rahmen der Ausführung der Codefolge CS werden die zu interpretierenden Codes C2 mit den zugehörigen Parametern P (sofern vorhanden) ohne Veränderung an einem Interpreter IN gegeben, der Bestandteil des Sicherheitsmoduls SM ist. Die Codes C2 sind dabei in der JavaCard-Spezifikation definierte Bytecodes, mit denen vorbestimmte Funktionen ausgeführt werden können. Ggf. können die Codes C2 zusätzlich auch proprietäre Bytecodes umfassen, welche nicht in der JavaCard-Spezifikation definiert sind und denen proprietäre Funktionen zugeordnet sind. Dies wird aus der weiter unten beschriebenen Interpretertabelle IN der Fig. 2 ersichtlich.

Im Unterschied zu den zu interpretierenden Codes C2 werden bei der Ausführung der Codefolge CS die zu ersetzenden Codes C1 temporär durch jeweilige Teilcodefolgen CS' ersetzt, die jeweils Code enthalten, der durch den Interpreter IN interpretierbar ist. Die Teilcodefolgen CS' werden hierfür an den Interpreter IN übergeben. In dem hier beschriebenen Ausführungsbeispiel sind die zu ersetzenden Codes C1 gegenüber den jeweiligen Teilcodefolgen, welche diese ersetzen, komprimiert, so dass Speicherplatz auf dem Sicherheitsmodul SM gespart wird.

Die an den Interpreter IN übergebenen Teilcodefolgen CS' sowie die Codes C2 werden mittels einer Interpretertabelle interpretiert. Ein Beispiel einer solchen Interpretertabelle ist in Fig. 2 gezeigt. Die Interpretertabelle ITab gemäß Fig. 2 spezifiziert in der ersten Spalte u.a. die Bytecodes 00 bis 79, die in den zu interpretierenden Codes C2 verwendet werden. Die Bytecodes 00 bis 70 sind dabei in der JavaCard-Spezifikation festgelegt. Im Unterschied hierzu sind die Bytecodes 71 bis 79 proprietäre Bytecodes, die nicht in der JavaCard-Spezifikation genutzt werden. In der zweiten Spalte "Adresse" der Interpretertabelle ITab sind den Bytecodes 00 bis 70 Funktionen Fkt0 bis Fkt70 zugeordnet, die in der JavaCard-Spezifikation definiert sind. Demgegenüber sind den Bytecodes 71 bis 79 proprietäre Funktionen prop_Fkt1 bis prop_Fkt9 zugeordnet. In der rechten Spalte der Interpretertabelle ITab werden ferner die Anzahl der jeweiligen, zu den Bytecodes gehörigen Parameter angegeben, die im Rahmen der Interpretation der Bytecodes benötigt werden.

Der untere Teil der Interpretertabelle ITab enthält ferner die Bytecodes 81 bis 99 für die entsprechenden zu ersetzenden Codes C1, wobei es sich hierbei um freie Bytecodes handelt, die nicht in der JavaCard-Spezifikation genutzt werden. Für diese Codes werden in der Spalte "Adresse" anstatt von Funktionen Auswahlinformationen AI angegeben, die festlegen, auf welche Weise Parameter in die dekomprimierten Codefolgen CS' einzufügen sind. Damit der Interpreter erkennt, dass sich die Bytecodes 81 bis 99 auf zu ersetzende Codes C1 beziehen, die vor ihrer Interpretation dekomprimiert werden müssen, wird dies in der rechten Spalte über den Wert 9 für die Anzahl der Parameter angezeigt.

Gemäß Fig. 2 hat der Bytecode 82 die Auswahlinformation "1, 3", was bedeutet, dass der einzige Parameter dieses Bytecodes an die Position 3 in der dekomprimierten Codefolge CS' einzufügen ist. Demgegenüber ist dem Bytecode 99 die Auswahlinformation "2, 2" zugeordnet, welche anzeigt, dass dessen beide Parameter an die Position 2 in der dekomprimierten Codefolge CS' einzufügen sind. Zu dem Bytecode 81 gehört im Unterschied zu den Bytecodes 82 und 99 kein Parameter, was in der zweiten Spalte der Interpretertabelle durch den Wert "0" angezeigt wird. Auch der Wert "0" stellt eine Auswahlinformation dar, welche festlegt, dass kein Parameter in der Codefolge CS' einzufügen ist.

Zum temporären Ersetzen der Bytecodes 81 bis 99 durch entsprechende Codefolgen CS' wird eine Dekompressionstabelle DC verwendet, welche auszugsweise in Fig. 3 angedeutet ist. Für jeden der Bytecodes 81 bis 99 wird dabei in der Spalte "Ersetze" die dekomprimierte Codefolge CS' festgelegt. In diese Codefolge werden dann basierend auf der zugeordneten Auswahlinformation AI die entsprechenden Parameter (sofern vorhanden) an den spezifizierten Positionen eingefügt. Diese Codefolge kann dann vom Interpreter IN verarbeitet werden.

Gemäß dem oben beschriebenen Beispiel ist für zu ersetzende Codes jeweils eine Auswahlinformation AI festgelegt, die eine Positionsauswahlinformation ist, welche die Position von einzufügenden Parametern in der Codefolge CS' spezifiziert. Die Auswahlinformation kann anstatt einer Positionsauswahlinformation auch eine ausgewählte Ersetzungsvorschrift (insbesondere eine Dekompressionstabelle) aus mehreren Ersetzungsvorschriften festlegen. Die Auswahlinformation kann ferner in Abhängigkeit von verschiedenen Kriterien festgelegt sein. Zum Beispiel kann die Auswahlinformation davon abhängen, in welchem logischen Bereich die Codefolge auf dem Sicherheitsmodul SM angeordnet ist. Der logische Bereich kann insbesondere durch den Kontext der virtuellen Maschine in Bezug auf ein Paket und/oder ein Applet und/oder eine aufgerufene Methode definiert sein. Weitere Beispiele von Kriterien zur Festlegung der Auswahlinformation wurden weiter oben genannt.

In dem oben beschriebenen Ausführungsbeispiel ist die Auswahlinformation in der Interpretertabelle ITab enthalten. Nichtsdestotrotz besteht gegebenenfalls auch die Möglichkeit, dass die Auswahlinformation in der Dekompressionstabelle DC festgelegt ist, welche hierzu eine weitere Spalte enthalten kann, die die Auswahlinformation in gleicher Weise wie in der Spalte "Adresse" der Interpretertabelle ITab aus Fig. 2 enthält.

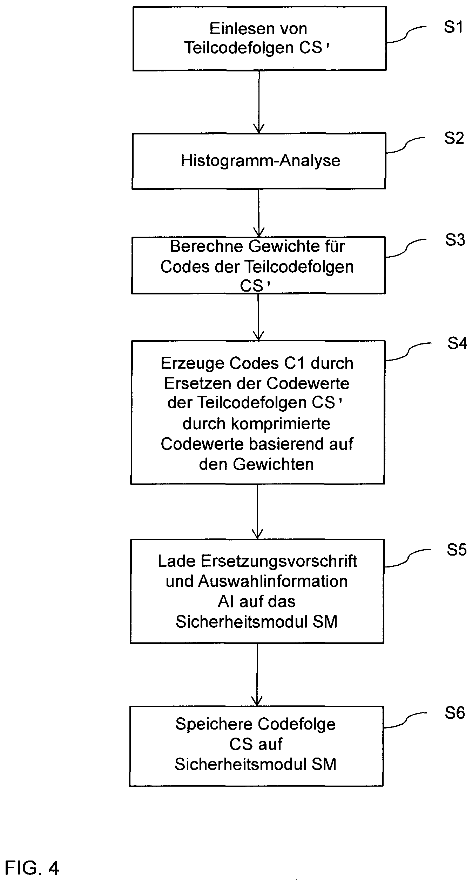

Im Folgenden wird anhand von Fig. 4 eine mögliche Art der Komprimierung von Teilcodefolgen CS' aus Fig. 1 zur Erzeugung der Codes C1 erläutert. Die korrespondierende Dekomprimierung verarbeitet die Auswahlinformation AI. Wie in Fig. 4 angedeutet, werden in Schritt S1 zunächst die zu komprimierenden Teilcodefolgen CS' eingelesen. In Schritt S2 wird eine Histogramm-Analyse der Teilcodefolgen CS' durchgeführt. Dabei werden die Häufigkeiten identischer Codes in allen Teilcodefolgen CS' ermittelt. Im hier betrachteten Ausführungsbeispiel umfassen die Codes in den Teilcodefolgen CS' jeweils einen einzelnen Bytecode aus der JavaCard-Spezifikation, dem ggf. ein oder mehrere Parameter zugeordnet sind. Ein solcher Bytecode wird im Folgenden als Standard-Bytecode bezeichnet.

In einem nächsten Schritt S3 werden Gewichte für die in den Teilcodefolgen CS' aufgetretenen Codes mit identischen Codewerten unter Berücksichtigung von deren Häufigkeiten ermittelt. Der Wert eines Gewichts ist dabei die Häufigkeit (d.h. die Anzahl des Auftretens) des entsprechenden Codes in allen Teilcodefolgen multipliziert mit der Anzahl von Bytes, die dadurch gespart werden, dass ein entsprechend festgelegter freier Bytecode (d.h. ein in der JavaCard-Spezifikation nicht genutzter Bytecode) als komprimierter Code (d.h. als zu ersetzender Code C1 gemäß Fig. 1) für den Code der Teilcodefolge verwendet wird.

In einem Beispielszenario benötigt die Bytecode/Parameter-Kombination SSPUSH 1024 drei Bytes zu ihrer Speicherung. Sie wurde in den Teilcodefolgen 500 Mal gefunden. Diese Kombination wird durch den freien Bytecode PROPB207 ersetzt, der nur ein Byte Speicherplatz braucht. Somit werden insgesamt zwei Bytes 500 Mal gespart, was einem Gewicht von 1000 entspricht. In diesem Beispielszenario benötigt demgegenüber die Bytecode/Parameter-Kombination BSPUSH 8 zwei Bytes und wurde 800 Mal in den Teilcodefolgen gefunden. Diese Kombination wird durch den freien Bytecode PROPB208 mit der Länge von einem Byte ersetzt. Für diese Kombination ergibt sich damit das Gewicht 800.

In Schritt S4 werden nacheinander in absteigender Reihenfolge der Gewichte beginnend mit dem höchsten Gewicht die Bytecode/Parameter-Kombinationen der Teilcodefolgen CS' durch entsprechende komprimierte Codes ersetzt. Auf diese Weise werden die Codes C1 der Codefolge CS der Fig. 1 erzeugt. Aus dieser Ersetzung der Teilcodefolgen durch komprimierte Codes wird eine Ersetzungsvorschrift abgeleitet, welche die Rückersetzung von den komprimierten Codes in die Codes der Teilcodefolgen festlegt. Diese Ersetzungsvorschrift stellt in der hier beschriebenen Ausführungsform eine Dekompressionstabelle dar, welche komprimierten Codes entsprechende dekomprimierte Codes der Teilcodefolgen zuordnet. Diese Dekompressionstabelle wird in Schritt S5 zusammen mit einer Auswahlinformation AI, welche die zu verwendende Ersetzungsvorschrift spezifiziert, auf das Sicherheitsmodul SM geladen. Anschließend wird in Schritt S6 die Codefolge CS aus den komprimierten Codes C1, den zu interpretierenden (unkomprimierten) Codes C2 sowie zugeordneten Parametern P (Fig. 1) auf dem Sicherheitsmodul SM gespeichert. Dabei ist jeder Code C1 mit der Auswahlinformation AI verknüpft.

Nachfolgend werden Abwandlungen von Kompressionsverfahren erläutert. In einer Variante werden die Parameter der Standard-Bytecodes in einer Teilcodefolge nur teilweise oder gar nicht komprimiert. In diesem Fall werden die Häufigkeiten für Codes ermittelt, deren Codeanteile ohne Berücksichtigung der nicht zu komprimierenden Parameter übereinstimmen. Dies wird im Folgenden an einem Beispiel erläutert.

Es wird folgender Code mit zugeordneten Parametern betrachtet:
0xBC 0x10 0x20 0x30 0x40.

Dabei ist 0xBC ein Standard-Bytecode und 0x10, 0x20, 0x30 und 0x40 sind vier Parameter. Gemäß der zuvor beschriebenen Komprimierung wird nach dem Auftreten der gesamten Bytecode/Parameter-Kombination in den Teilcodefolgen gesucht. In der hier beschriebenen Abwandlung wird der zweite Parameter 0x20 nicht komprimiert und als variabel betrachtet. Demzufolge werden die Häufigkeiten folgender Bytecode/Parameter-Kombinationen ermittelt:
0xBC 0x10 <beliebiger zweiter Parameterwert> 0x30 0x40.

Anschließend werden analog wie oben beschrieben entsprechende Gewichte für diese Codestruktur bestimmt. Bei der Kompression wird dann der Codeanteil ohne den zweiten Parameterwert durch einen freien Bytecode ersetzt. Der zweite Parameterwert verbleibt weiterhin als Parameter im komprimierten Code.

Betrachtet man folgende Bytecode/ Parameter-Kombination:
0xBC 0x10 0xAA 0x30 0x40,
so wird diese unter Verwendung des freien Bytecodes 0xEC in folgenden komprimierten Code gewandelt:
0xEC 0xAA.

Ggf. können auch zwei oder mehr Parameter als variabel betrachtet werden und somit weiterhin als Parameter im komprimierten Code verbleiben. Betrachtet man beispielsweise die Bytecode/Parameter-Kombination 0xBC 0x10 0xAA 0x30 0xBB,
und werden das zweite Parameterbyte 0xAA und das vierte Parameterbyte 0xBB als variabel betrachtet, so könnte sich hieraus folgender komprimierter Code unter Verwendung des freien Bytecodes 0xEC ergeben:
0xEC 0xAA 0xBB.

Im Vorangegangenen wurden Beispiele beschrieben, bei dem Histogramme für identische Codes mit jeweils einem Standard-Bytecode und dessen Parametern erzeugt werden. In gleicher Weise kann die Histogramm-Analyse ggf. auch für zusammenhängende Blöcke von mehreren Standard-Bytecodes mit deren Parametern durchgeführt werden. Mit anderen Worten umfasst in diesem Fall ein zu komprimierender Code mehrere Standard-Bytecodes mit zugeordneten Parametern.

Zum Beispiel kann ein solcher Code einen Standard-Bytecode mit einem Ein-Byte-Parameter sowie einen darauf folgenden Standard-Bytecode ohne Parameter umfassen. Ein Beispiel hierfür ist der Code "0xC7 XX 0x3B", wobei 0xC7 und 0x3B die Standard-Bytecodes und XX der Parameter des Bytecodes 0xC7 ist. Bei der Histogramm-Analyse wird dann der Parameter XX als variabel betrachtet und somit nach folgendem Codemuster gesucht:
0xC7 <beliebiger Parameterwert> 0x3B.

Die Bytecode-Kombination "0xC7 0x3B" kann dann zum Beispiel durch den freien Bytecode PROPB209 ersetzt werden, der den Codewert 0xD1 aufweist. Diesem Bytecode wird der Parameter XX zugeordnet. Demzufolge wird die Bytecode/Parameter-Kombination "0xC7 XX 0x3B" durch den Code "0xD1 XX" ersetzt.

Die im Vorangegangenen beschriebenen Ausführungsformen der Erfindung weisen eine Reihe von Vorteilen auf. Insbesondere kann eine sehr gute Kompression von Codefolgen in einem Sicherheitsmodul erreicht werden, wobei die Komprimierung in Abhängigkeit von beliebigen Kriterien für entsprechende Codes der Codefolge geeignet angepasst werden kann. Dies wird durch die Verwendung von Auswahlinformationen erreicht.

In einer nur optionalen Erweiterung der vorliegenden Lösung könnten zusätzlich zu der Verwendung der Auswahlinformation mehrere Interpretertabellen und /oder Dekompressionstabellen vorgesehen werden. Eine erste Gruppe von Applets verwendet eine erste Interpretertabelle (und /oder Dekompressionstabelle) und zumindest ein zweites Applet bzw. eine zweite Gruppe von Applets verwendet eine entsprechende zweite Interpretertabelle (und /oder Dekompressionstabelle). Im Folgenden wird von der Interpretertabelle gesprochen, ohne dass jeweils auf die und/oder-Alternative Dekompressionstabelle verwiesen wird. Zumindest die erste (und/ oder die zweite) Interpretertabelle wird verwendet, wie zuvor ausführlich mit Bezug auf die Figuren beschrieben. Die erste Gruppe von Applets wird durch vorab geladene Applets gebildet (Pre-issuance). Die zweite Gruppe von Applets wird durch nachgeladene Applets gebildet (Post-issuance). Mit einem Applet kann eine zweite Interpretertabelle nachgeladen werden. Die zweite Interpretertabelle kann also applet-spezifisch sein oder spezifisch für eine Gruppe von Applets. Das Sicherheitsmodul speichert für Applets eine Gruppenangabe, z.b. für Applets einer zweiten Gruppe die Eigenschaft "nachgeladen". Für vorab geladene Applets (vor Ausgabe des Sicherheitsmoduls an den Benutzer) verwendet das Sicherheitsmodul die erste Interpretertabelle. Für nachgeladene Applets (nach Ausgabe des Sicherheitsmoduls an den Benutzer) verwendet das Sicherheitsmodul die zweite Interpretertabelle oder die dem Applet zugeordnete zweite Interpretertabelle aus mehreren zweiten Interpretertabellen.

## Patentansprüche

1. Verfahren zum Ausführen einer Codefolge (CS) auf einem Sicherheitsmodul (SM), wobei die Codefolge (CS) zu ersetzende Codes (C1) und zu interpretierende Codes (C2) umfasst, mit folgenden Schritten:
a) temporäres Ersetzen eines jeweiligen zu ersetzenden Codes (C1) durch eine Teilcodefolge (CS'), welche zumindest einen Code mit interpretierbarem Codewert umfasst,
wobei das Ersetzen abhängig von dem Codewert des zu ersetzenden Codes (C1) erfolgt, und
b) Interpretieren der zu interpretierenden Codes (C2) der Codefolge (CS) und der Teilcodefolge (CS') mit Hilfe von Interpretationsinformationen (ITab) für Codewerte;
**dadurch gekennzeichnet, dass**
in dem Schritt des Ersetzens die Teilcodefolge (CS') für den Codewert des zu ersetzenden Codes (C1) zudem abhängig von einer Auswahlinformation (AI) erzeugt wird, dass
abhängig von der Auswahlinformation (AI) unterschiedliche Teilcodefolgen (CS') für den gleichen Codewert erzeugbar sind, und dass die Auswahlinformation (AI) der Codefolge (CS) zugeordnet ist und davon abhängt:
- zu welchem Codetyp die Codefolge (CS) gehört; und/oder
- an welchem Speicherort im Sicherheitsmodul (SM) die Codefolge (CS) gespeichert ist; und/oder
- zu welcher Applikation und/oder zu welchem Paket und/oder zu welcher Methode die Codefolge (CS) gehört; und/oder
- von welchem Codeherausgeber die Codefolge (CS) stammt; und/ oder
- welcher Sicherheitsstufe die Codefolge (CS) zugeordnet ist.

2. Verfahren nach Anspruch 1, **dadurch gekennzeichnet, dass** die Auswahlinformation (AI) eine von mehreren Ersetzungsvorschriften für zu ersetzende Codes (C1) auswählt.

3. Verfahren nach einem der vorhergehenden Ansprüche, **dadurch gekennzeichnet, dass** die Codefolge (CS) Parameter (P) und/oder die Auswahlinformation (AI) umfasst.

4. Verfahren nach Anspruch 3, **dadurch gekennzeichnet, dass** die Auswahlinformation (AI) eine Positionsauswahlinformation (AI) umfasst, welche angibt, an welcher Position in der Teilcodefolge (CS') ein jeweiliger Parameter (P) der Codefolge (CS) einzufügen ist.

5. Verfahren nach Anspruch 4, **dadurch gekennzeichnet, dass** die Positionsauswahlinformation (AI) in der Ersetzungsvorschrift oder den Interpretationsinformationen (ITab) enthalten ist.

6. Verfahren nach einem der vorhergehenden Ansprüche, **dadurch gekennzeichnet, dass** zu interpretierende Codes (C2) Codewerte aufweisen, die in einer Code-Spezifikation vorgegeben sind, und zu ersetzende Codes (C1) in der Code-Spezifikation ungenutzte Codewerte aufweisen.

7. Verfahren nach einem der vorhergehenden Ansprüche, **dadurch gekennzeichnet, dass** zu interpretierende Codes (C2) der Codefolge (CS) und/oder Codes der Teilcodefolge (CS') proprietäre, nicht in einer Code-Spezifikation genutzte Codewerte aufweisen, welche mittels der Interpretationsinformatiönen (ITab) interpretiert werden.

8. Sicherheitsmodul mit einer darauf gespeicherten Codefolge (CS), wobei die Codefolge (CS) zu ersetzende Codes (C1) und zu interpretierende Codes (C2) umfasst, wobei das Sicherheitsmodul (SM) zum Ausführen eines Verfahrens mit den mit folgenden Schritten eingerichtet ist:
a) temporäres Ersetzen eines jeweiligen zu ersetzenden Codes (C1) durch eine Teilcodefolge (CS'), welche zumindest einen Code mit interpretierbarem Codewert umfasst,
wobei das Ersetzen abhängig von dem Codewert des zu ersetzenden Codes (C1) erfolgt, und
b) Interpretieren der zu interpretierenden Codes (C2) der Codefolge (CS) und der Teilcodefolge (CS') mit Hilfe von Interpretationsinformationen (ITab) für Codewerte;
**dadurch gekennzeichnet, dass**
in dem Schritt des Ersetzens die Teilcodefolge (CS') für den Codewert des zu ersetzenden Codes (C1) zudem abhängig von einer Auswahlinformation (AI) erzeugt wird, dass
abhängig von der Auswahlinformation (AI) unterschiedliche Teilcodefolgen (CS') für den gleichen Codewert erzeugbar sind, und dass die Auswahlinformation (AI) der Codefolge (CS) zugeordnet ist und davon abhängt:
- zu welchem Codetyp die Codefolge (CS) gehört; und/oder
- an welchem Speicherort im Sicherheitsmodul (SM) die Codefolge (CS) gespeichert ist; und/oder
- zu welcher Applikation und/oder zu welchem Paket und/oder zu welcher Methode die Codefolge (CS) gehört; und/oder
- von welchem Codeherausgeber die Codefolge (CS) stammt; und/oder
welcher Sicherheitsstufe die Codefolge (CS) zugeordnet ist.

9. Sicherheitsmodul nach Anspruch 8, **dadurch gekennzeichnet, dass** das Sicherheitsmodul zum Ausführen eines Verfahrens nach einem der Ansprüche 1 bis 7 eingerichtet ist.

10. Verfahren zur Erzeugung einer Codefolge (CS) auf einem Sicherheitsmodul (SM), wobei die Codefolge (CS) zu ersetzende Codes (C1) und zu interpretierende Codes (C2) umfasst und die Codefolge (CS) aus Teilcodefolgen (CS') mit jeweils zumindest einem Code mit interpretierbarem Codewert und aus den zu interpretierenden Codes (C2) generiert und auf dem Sicherheitsmodul (SM) gespeichert wird, **dadurch gekennzeichnet, dass**
eine Auswahlinformation (AI) festgelegt wird, so dass bei dem Ausführen der Codefolge (CS) auf dem Sicherheitsmodul (SM) die zu ersetzenden Codes (C1) in Abhängigkeit von der Auswahlinformation (AI) temporär durch jeweilige Teilcodefolgen (CS') ersetzt werden, dass
abhängig von der Auswahlinformation (AI) unterschiedliche Teilcodefolgen (CS') für den gleichen Codewert erzeugbar sind, und dass die Auswahlinformation (AI) der Codefolge (CS) zugeordnet ist und davon abhängt:
- zu welchem Codetyp die Codefolge (CS) gehört; und/oder
- an welchem Speicherort im Sicherheitsmodul (SM) die Codefolge (CS) gespeichert ist; und/oder
- zu welcher Applikation und/oder zu welchem Paket und/oder zu welcher Methode die Codefolge (CS) gehört; und/oder
- von welchem Codeherausgeber die Codefolge (CS) stammt; und/oder
welcher Sicherheitsstufe die Codefolge (CS) zugeordnet ist.

11. Verfahren nach Anspruch 1 bis 7, **dadurch gekennzeichnet**, das Verfahren derart ausgestaltet ist, dass die hierdurch erzeugte Codefolge (CS) mit einem Verfahren nach einem der Ansprüche 1 bis 9 ausgeführt werden kann.

12. Einrichtung zur Erzeugung einer Codefolge (CS) auf einem Sicherheitsmodul (SM), wobei die Codefolge (CS) zu ersetzende Codes (C1) und zu interpretierende Codes (C2) umfasst, wobei die Einrichtung zur Durchführung eines Verfahrens ausgestaltet ist, bei dem die Codefolge (CS) aus Teilcodefolgen (CS') mit jeweils zumindest einem Code mit interpretierbarem Codewert und aus den zu interpretierenden Codes (C2) generiert und auf dem Sicherheitsmodul (SM) gespeichert wird,
**dadurch gekennzeichnet, dass**
eine Auswahlinformation (AI) festgelegt wird, so dass bei dem Ausführen der Codefolge (CS) auf dem Sicherheitsmodul (SM) die zu ersetzenden Codes (C1) in Abhängigkeit von der Auswahlinformation (AI) temporär durch jeweilige Teilcodefolgen (CS') ersetzt werden,
dass
abhängig von der Auswahlinformation (AI) unterschiedliche Teilcodefolgen (CS') für den gleichen Codewert erzeugbar sind, und dass die Auswahlinformation (AI) der Codefolge (CS) zugeordnet ist und davon abhängt:
- zu welchem Codetyp die Codefolge (CS) gehört; und/oder
- an welchem Speicherort im Sicherheitsmodul (SM) die Codefolge (CS) gespeichert ist; und/oder
- zu welcher Applikation und/oder zu welchem Paket und/oder zu welcher Methode die Codefolge (CS) gehört; und/oder
- von welchem Codeherausgeber die Codefolge (CS) stammt; und/oder
welcher Sicherheitsstufe die Codefolge (CS) zugeordnet ist.

13. Einrichtung nach Anspruch 12, **dadurch gekennzeichnet**, die Einrichtung derart ausgestaltet ist, dass die mit der Einrichtung erzeugte Codefolge (CS) mit einem Verfahren nach einem der Ansprüche 1 bis 7 ausgeführt werden kann.

## Claims

1. A method for executing a code sequence (CS) on a security module (SM), the code sequence (CS) comprising codes to be replaced (C1) and codes to be interpreted (C2), having the following steps:
a) temporarily replacing a respective code to be replaced (C1) by a partial code sequence (CS') that comprises at least one code having an interpretable code value,
the replacement taking place in dependence on the code value of the code to be replaced (C1), and
b) interpreting the codes to be interpreted (C2) in the code sequence (CS) and in the partial code sequence (CS') with the aid of interpretation information (ITab) for code values;
**characterized in that**
in the replacement step, the partial code sequence (CS') for the code value of the code to be replaced (C1) is additionally produced in dependence on a piece of selection information (AI), that, for the same code value, different partial code sequences (CS') are producible in dependence on the piece of selection information (AI),
and
that the piece of selection information (AI) is associated with the code sequence (CS) and is dependent on:
- which code type the code sequence (CS) belongs to; and/or
- which memory location in the security module (SM) the code sequence (CS) is stored at; and/or
- which application and/ or which packet and/ or which method the code sequence (CS) belongs to; and/or
- which code publisher the code sequence (CS) originates from; and/ or
- which security level the code sequence (CS) is associated with.

2. The method according to claim 1, **characterized in that** the piece of selection information (AI) selects one of multiple replacement rules for codes to be replaced (C1).

3. The method according to one of the preceding claims, **characterized in that** the code sequence (CS) comprises parameters (P) and/or the piece of selection information (AI).

4. The method according to claim 3, **characterized in that** the piece of selection information (AI) comprises a piece of position selection information (AI) that indicates at which position in the partial code sequence (CS') a respective parameter (P) of the code sequence (CS) is to be inserted.

5. The method according to claim 4, **characterized in that** the piece of position selection information (AI) is included in the replacement rule or the interpretation information (ITab).

6. The method according to one of the preceding claims, **characterized in that** codes to be interpreted (C2) comprise code values that are specified in a code specification, and codes to be replaced (C1) comprise code values unused in the code specification.

7. The method according to one of the preceding claims, **characterized in that** codes to be interpreted (C2) in the code sequence (CS) and/or codes in the partial code sequence (CS') comprise proprietary code values that are not used in a code specification and that are interpreted by means of the interpretation information (ITab).

8. A security module having a code sequence (CS) stored thereon, the code sequence (CS) comprising codes to be replaced (C1) and codes to be interpreted (C2), the security module (SM) being set up for executing a method having the following steps:
a) temporarily replacing a respective code to be replaced (C1) by a partial code sequence (CS') that comprises at least one code having an interpretable code value,
the replacement taking place in dependence on the code value of the code to be replaced (C1), and
b) interpreting the codes to be interpreted (C2) in the code sequence (CS) and in the partial code sequence (CS') with the aid of interpretation information (ITab) for code values;
**characterized in that**
in the replacement step, the partial code sequence (CS') for the code value of the code to be replaced (C1) is additionally produced in dependence on a piece of selection information (AI), that, for the same code value, different partial code sequences (CS') are producible in dependence on the piece of selection information (AI),
and
that the piece of selection information (AI) is associated with the code sequence (CS) and is dependent on:
- which code type the code sequence (CS) belongs to; and/or
- which memory location in the security module (SM) the code sequence (CS) is stored at; and/or
- which application and/ or which packet and/ or which method the code sequence (CS) belongs to; and/or
- which code publisher the code sequence (CS) originates from;
and/ or
- which security level the code sequence (CS) is associated with.

9. The security module according to claim 8, **characterized in that** the security module is set up to execute a method according to one of claims 1 to 7.

10. A method for producing a code sequence (CS) on a security module (SM), the code sequence (CS) comprising codes to be replaced (C1) and codes to be interpreted (C2), and the code sequence (CS) being generated from partial code sequences (CS') having, in each case, at least one code having an interpretable code value, and from the codes to be interpreted (C2), and being stored on the security module (SM),
**characterized in that**
a piece of selection information (AI) is defined such that, in executing the code sequence (CS) on the security module (SM), the codes to be replaced (C1) are temporarily replaced by respective partial code sequences (CS') in dependence on the piece of selection information (AI),
that, for the same code value, different partial code sequences (CS') are producible in dependence on the piece of selection information (AI), and
that the piece of selection information (AI) is associated with the code sequence (CS) and is dependent on:
- which code type the code sequence (CS) belongs to; and/or
- which memory location in the security module (SM) the code sequence (CS) is stored at; and/or
- which application and/or which packet and/or which method the code sequence (CS) belongs to; and/or
- which code publisher the code sequence (CS) originates from;
and/ or
- which security level the code sequence (CS) is associated with.

11. The method according to claim 10, **characterized in that** the method is configured in such a way that the code sequence (CS) produced thereby can be executed with a method according to one of claims 1 to 7.

12. A device for producing a code sequence (CS) on a security module (SM), the code sequence (CS) comprising codes to be replaced (C1) and codes to be interpreted (C2), the device being configured for carrying out a method in which the code sequence (CS) is generated from partial code sequences (CS') having, in each case, at least one code having an interpretable code value, and from the codes to be interpreted (C2), and is stored on the security module (SM),
**characterized in that**
a piece of selection information (AI) is defined such that, in executing the code sequence (CS) on the security module (SM), the codes to be replaced (C1) are temporarily replaced by respective partial code sequences (CS') in dependence on the piece of selection information (AI),
that, for the same code value, different partial code sequences (CS') are producible in dependence on the piece of selection information (AI), and
that the piece of selection information (AI) is associated with the code sequence (CS) and is dependent on:
- which code type the code sequence (CS) belongs to; and/ or
- which memory location in the security module (SM) the code sequence (CS) is stored at; and/or
- which application and/or which packet and/ or which method the code sequence (CS) belongs to; and/ or
- which code publisher the code sequence (CS) originates from;
and/ or
- which security level the code sequence (CS) is associated with.

13. The device according to claim 12, **characterized in that** the device is configured in such a way that the code sequence (CS) produced with the device can be executed with a method according to one of claims 1 to 7.

## Revendications

1. Procédé d'exécution d'une série de codes (CS) sur un module de sécurité (SM), dans lequel la série de codes (CS) comprend des codes à remplacer (C1) et des codes à interpréter (C2), comportant les étapes suivantes :
a) remplacement temporaire d'un code respectif à remplacer (C1) par une série de sous-codes (CS') qui présente au moins un code doté d'une valeur de code pouvant être interprétée,
le remplacement ayant lieu en fonction de la valeur de code du code à remplacer (C1), et
b) interprétation du code pouvant être interprété (C2) de la série de codes (CS) et de la série de sous-codes (CS') à l'aide d'informations d'interprétation (ITab) pour les valeurs de codes;
**caractérisé en ce que**,
dans l'étape de remplacement, la série de sous-codes (CS') pour la valeur de cods du code à remplacer (C1) est en outre générée en fonction d'une information de sélection (AI), que,
en fonction de l'information de sélection (AI), différentes séries de sous-codes (CS') peuvent être générées pour la même valeur de code, et que l'information de sélection (AI) est associée à la série de codes (CS) et dépend de ce qui suit :
- à quel type de codes la série de codes (CS) appartient; et/ou
- à quel emplacement de mémoire du module de sécurité (SM) la série de codes (CS) est enregistrée; et/ou
- de quelle application et/ou de quel paquet et/ou de quelle méthode la série de codes (CS) appartient; et/ou
- de quel émetteur de codes la série de codes '(CS) provient; et/ou
- à quel niveau de sécurité la série de codes (CS) est affectée.

2. Procédé selon la revendication 1, **caractérisé en ce que** l'information de sélection (AI) sélectionne une parmi plusieurs règles de remplacement pour les codes à remplacer (C1).

3. Procédé selon une des revendications précédentes, **caractérisé en ce que** la série de codes (CS) comprend des paramètres (P) et/ou l'information de sélection (AI) .

4. Procédé selon la revendication 3, **caractérisé en ce que** l'information de sélection (AI) comprend une information de sélection de position (AI) qui indique à quelle position dans la série de sous-codes (CS') un paramètre respectif (P) de la série de codes (CS) doit être ajouté.

5. Procédé selon la revendication 4, **caractérisé en ce que** l'information de sélection de position (AI) est contenue dans la règle de remplacement ou dans les informations d'interprétation (ITab).

6. Procédé selon une des revendications précédentes, **caractérisé en ce que** les codes à interpréter (C2) présentent des valeurs de codes qui sont prédéfinies dans une spécification de codes, et que les codes à remplacer (C1) présentent des valeurs de codes non utilisées dans la spécification de codes.

7. Procédé selon une des revendications précédentes, **caractérisé en ce que** les codes à interpréter (C2) de la série de codes (CS) et/ou les codes de la série de sous-codes (CS') présente des valeurs de code propriétaires non utilisées dans une spécification de codes et qui sont interprétées au moyen des informations d'interprétation (ITab).

8. Module de sécurité comportant une série de codes (CS) enregistrée dessus, la série de codes (CS) comprenant des codes à remplacer (C1) et des codes à interpréter (C2), le module de sécurité (SM) étant conçu pour exécuter un procédé comportant les étapes suivantes :
a) remplacement temporaire d'un code respectif à remplacer (C1) par une série de sous-codes (CS') qui présente au moins un code doté d'une valeur de code pouvant être interprétée,
le remplacement ayant lieu en fonction de la valeur de code du code à remplacer (C1), et
b) interprétation du code pouvant être interprété (C2) de la série de codes (CS) et de la série de sous-codes- (CS') à l'aide d'informations d'interprétation (ITab) pour les valeurs de codes;
**caractérisé en ce que**,
dans l'étape de remplacement, la série de sous-codes (CS') pour la valeur de code du code à remplacer (C1) est en outre générée en fonction d'une information de sélection (AI), que,
en fonction de l'information de sélection (AI), différentes séries de sous-codes (CS') peuvent être générées pour la même valeur de code, et que l'information de sélection (AI) est associée à la série de codes (CS) et dépend de ce qui suit :
- à quel type de codes la série de codes (CS) appartient; et/ou
- à quel emplacement de mémoire du module de sécurité (SM) la série de codes (CS) est enregistrée; et/ou
- de quelle application et/ou de quel paquet et/ou de quelle méthode la série de codes (CS) appartient; et/ou
- de quel émetteur de codes la série de codes (CS) provient; et/ou
- à quel niveau de sécurité la série de codes (CS) est affectée.

9. Module de sécurité selon la revendication 8, **caractérisée en ce que** le module de sécurité est conçu pour exécuter un procédé selon une des revendications 1 à 7.

10. Procédé de génération d'une série de codes (CS) sur un module de sécurité (SM), dans lequel la série de codes (CS) comprend des codes à remplacer (C1) et des codes à interpréter (C2) et la série de codes (CS) est générée à partir de séries de sous-codes (CS') comportant respectivement au moins un code doté d'une valeur de code pouvant être interprétée et des codes à interpréter (C2) et enregistrée sur le module de sécurité (SM), **caractérisé en ce que** :
une information de sélection (AI) est établie de manière à ce que, lors de l'exécution de la série de codes (CS) sur le module de sécurité (SM), les codes à remplacer (C1) soient remplacés temporairement en fonction de l'information de sélection (AI), que en fonction de l'information de sélection (AI), différentes séries de sous-codes (CS') puissent être générées pour la même valeur de code et que l'information de sélection (AI) soit associée à la série de codes (CS) et dépende de ce qui suit :
- à quel type de codes la série de codes (CS) appartient; et/ou
- à quel emplacement de mémoire du module de sécurité (SM) la série de codes (CS) est enregistrée; et/ou
- de quelle application et/ou de quel paquet et/ou de quelle méthode la série de codes (CS) appartient; et/ou
- de quel émetteur de codes la série de codes (CS) provient; et/ou
- à quel niveau de sécurité la série de codes (CS) est affectée.

11. Procédé selon la revendication 10, **caractérisée en ce que** le procédé est conçu de manière à ce que la série de codes (CS) ainsi générée puisse être exécutée par un procédé selon une des revendications 1 à 7.

12. Dispositif de génération d'une série de codes (CS) sur un module de sécurité (SM), dans lequel la série de codes (CS) comprend des codes à remplacer (C1) et des codes à interpréter (C2), le dispositif de réalisation de procédé étant conçu pour que la série de codes (CS) soient générée à partir de séries de sous-codes (CS') comportant respectivement au moins un code doté d'une valeur de code pouvant être interprétée et des codes à interpréter (C2) et enregistrée sur le module de sécurité (SM), **caractérisé en ce**
**qu'**une information de sélection (AI) est établie de manière à ce que, lors de l'exécution de la série de codes (CS) sur le module de sécurité (SM), les codes à remplacer (C1) soient remplacés temporairement en fonction de l'information de sélection (AI) par des séries de sous-codes respectives (CS'), que en fonction de l'information de sélection (AI), différentes séries de sous-codes (CS') puissent être générées pour la même valeur de code et que l'information de sélection (AI) soit associée à la série de codes (CS) et dépende de ce qui suit :
- à quel type de codes la série de codes (CS) appartient; et/ou
- à quel emplacement de mémoire du module de sécurité (SM) la série de codes (CS) est enregistrée; et/ou
- de quelle application et/ou de quel paquet et/ou de quelle méthode la série de codes (CS) appartient; et/ou
- de quel émetteur de codes la série de codes (CS) provient; et/ou
- à quel niveau de sécurité la série de codes (CS) est affectée.

13. Dispositif selon la revendication 12, **caractérisé en ce que** le dispositif est conçu pour que la série de codes (CS) générée avec le dispositif puisse être exécutée par un procédé selon une des revendications 1 à 7.
